# EUROPÄISCHE PATENTSCHRIFT

(11) **EP 0 899 470 B1**
(45) Veröffentlichungstag und Bekanntmachung des Hinweises auf die Patenterteilung: **27.02.2002**
(21) Anmeldenummer: 98112914.1
(22) Anmeldetag: 11.07.1998
(51) Int. Cl.: F16C 1/22

(54) **Anschlussteil für die Festlegung eines Betätigungszuges**
Mounting fitting for control cable
Butée pour câble de commande

(30) Priorität: 23.08.1997 DE 29715202 U
(43) Veröffentlichungstag der Anmeldung: 03.03.1999
(73) Patentinhaber: Dura Automotive Systems GmbH, 40549 Düsseldorf (DE)
(72) Erfinder: Bänsch, Gotthard, 41469 Neuss (DE)
(74) Vertreter: Paul, Dieter-Alfred, Dipl.-Ing.

(56) Entgegenhaltungen:
- EP-A- 0 431 307
- EP-A- 0 508 625
- EP-A- 0 627 570
- DE-A- 19 542 098
- DE-A- 19 620 496
- DE-U- 9 304 462
- FR-A- 2 611 832
- US-A- 5 560 259

## Beschreibung

Die Erfindung betrifft ein Anschlußteil für die Festlegung eines Betätigungszuges, der einen Betätigungsmantel und eine darin verschieblich geführte Betätigungsseele aufweist, mit den Merkmalen a) bis k) des Anspruchs 1.

Zur Betätigung von Einrichtungen insbesondere in Kraftfahrzeugen werden in einer Vielzahl von Anwendungsfällen sogenannte Betätigungszüge verwendet. Sie weisen jeweils einen flexiblen Betätigungsmantel und eine darin axial geführte Betätigungsseele - meist in Form eines als Seil oder Litze ausgebildeten Betätigungsdrahtes - auf, wobei die Betätigungsseele der Kraftübertragung dient.

In der Regel ist an beiden Enden des Betätigungsmantels ein Anschlußteil angeordnet, über die der Betätigungsmantel an Bauteilen, beispielsweise an der Karrosserie von Kraftfahrzeugen, festgelegt wird. Der Betätigungsdraht durchläuft die Anschlußteile und steht über diese nach außen vor, wobei er über Endstücke einerends mit dem Betätigungsorgan und anderenends mit dem zu betätigenden Organ verbunden werden kann.

In der EP 0 627 570 A1 und der DE 195 42 098 A1 ist ein Anschlußteil offenbart, daß ein Anschlußgehäuse aufweist, in dem eine Muffe zur eingangsseitigen Aufnahme des Betätigungsmantels vorgesehen ist. Die Muffe kann mit dem Anschlußgehäuse einstückig sein (DE 195 42 098 A1) oder ein separates Teil bilden (EP 0 627 570 A1), welches in dem Anschlußgehäuse über geräuschdämpfende Gummielemente gehaltert ist. Ausgangsseitig weist das Anschlußteil ein Führungsrohr auf, welches in dem Anschlußgehäuse über ein Kugelgelenk gelagert ist, so daß es sich verschwenken läßt.

Bei den vorbeschriebenen Anschlußteilen ist eine Einstellung der wirksamen Länge des Betätigungsmantels nicht möglich. In manchen Fällen ist eine solche Einstellbarkeit jedoch erwünscht. Hierfür sind Anschlußteile entwickelt worden, bei denen die Muffe innerhalb des Anschlußgehäuses axial verschieblich geführt ist. Das Anschlußgehäuse besteht im wesentlichen aus einem Gummiring mit einer Halterung, wobei der Gummiring die Muffe mit einer solchen Vorspannung umschließt, daß bei normaler Betätigung des Betätigungszuges keine Relativbewegung zwischen Gummiring und Muffe stattfindet.

Die Verbindung zwischen Muffe und Anschlußgehäuse bzw. Gummiring ist rein kraftschlüssig, obwohl in die Muffe außenseitig eine Vielzahl von axial hintereinander angeordneten Rippen eingeformt sind. In diese Rippen kann ein Clip eingesetzt werden, um die Stellung der Muffe innerhalb des Gummirings nach einem Selbsteinstellvorgang zu sichern.

In der EP-A-0 508 0625 ist ein gattungsgemäßes Anschlußteil für die Festlegung eines Betätigungszuges offenbart. Das Anschlußteil weist ein Anschlußgehäuse auf, das einen Durchgangskanal für die Betätigungsseele umgibt. In dem Anschlußgehäuse ist eine Muffe axial verschieblich geführt, wobei Muffe und Anschlußgehäuse eine Mehrzahl von zueinander komplementären Eingriffselementen aufweisen, die einen Eingriff in verschiedenen Axialstellungen der Muffe ermöglichen. Die gehäuseseitigen Eingriffselemente sitzen an einer Eingriffstülle des Anschlußgehäuses, die in mehrere Tüllensegmente aufgeteilt ist, welche radial beweglich sind. An dem Anschlußgehäuse ist eine axial verschiebliche Blockierhülse vorgesehen, welche zwischen einer Blockier- und einer Nichtblockierstellung axial verschieblich ist, wobei die gehäuseseitigen Eingriffselemente in der Blockierstellung in Eingriffsstellung gehalten werden.

Bei dem vorbekannten Anschlußteil ist die Blockierhülse von außen über die Tüllensegmente des Anschlußgehäuses gestülpt. Die Blockierhülse bildet ein loses Teil, das verlorengehen kann und das zumindest am Anfang des Überstülpvorgangs ungeführt ist. Dies macht das Überstülpen schwierig, zumal die Tüllensegmente dazu tendieren, sich radial nach außen zu bewegen. Sie müssen deshalb von Hand zusammengedrückt werden, damit die Blockierhülse über die Tüllensegmente geschoben werden kann. Außerdem besteht keine zuverlässige Kontrolle darüber, daß die Blockierhülse auch ausreichend weit über die Tüllensegmente geschoben wird. Zwar ist ein Rastring für die Blockierhülse vorhanden. Stößt die Blockierhülse vor den Rastring, kann dies irrtümlicherweise als eine Verrastung interpretiert werden mit der Folge, daß die Blockierhülse nicht gesichert ist und sogar verlorengehen kann, was den Verlust des Eingriffs zwischen Anschlußteil und Muffe bewirken kann.

Der Erfindung liegt somit die Aufgabe zugrunde, ein Anschlußteil, wie es in der EP-A-0 508 625 beschrieben ist, so zu gestalten, daß eine sichere Verbindung zwischen Anschlußgehäuse und Muffe herstellbar ist.

Diese Aufgabe wird erfindungsgemäß durch folgende Merkmale gelöst:
l) die Blockierhülse ist in Richtung auf das freie Ende der Tüllensegmente von der Nichtblockierstellung in die Blockierstellung verschieblich;
m) die Blockierhülse ist in Richtung auf die Blockierstellung federbeaufschlagt.

Das erfindungsgemäße Anschlußteil zeichnet sich dadurch aus, daß die Bewegung der axial verschieblich auf dem Anschlußgehäuse gelagerten Blockierhülse in die Blockierstellung zum freien Ende der Tüllensegmente hin erfolgt. Aufgrund der Federbeaufschlagung wird die Blockierhülse in Richtung auf die Blockierstellung bewegt und kann sich nicht selbständig wieder aus dieser Stellung zurückbewegen. Hierdurch ist die Verbindung außerordentlich sicher.

Bei Ausbildung des Blockierelements als Blockierhülse kann das bzw. die Tüllensegment(e) in der Nichteingriffsstellung radial nach außen abstehend ausgebildet sein, so daß das Tüllensegment bzw. die Tüllensegmente radial nach innen in die Eingriffsstellung bewegt werden.

Schließlich ist gemäß der Erfindung vorgesehen, daß die Muffe ausgangsseitig ein vorzugweise über ein Kugelgelenk angelenktes Führungsrohr aufweist.

In der Zeichnung ist die Erfindung an Hand eines Ausführungsbeispiels näher veranschaulicht. Es zeigen:
- Figur 1: einen Längsschnitt durch das erfindungsgemäße Anschlußteil in der Nichteingriffsstellung;
- Figur 2: das Anschlußteil gemäß Figur 1 im Längsschnitt in der Eingriffsstellung und
- Figur 3: eine Draufsicht auf das Anschlußteil gemäß den Figuren 1 und 2 in der Eingriffsstellung.

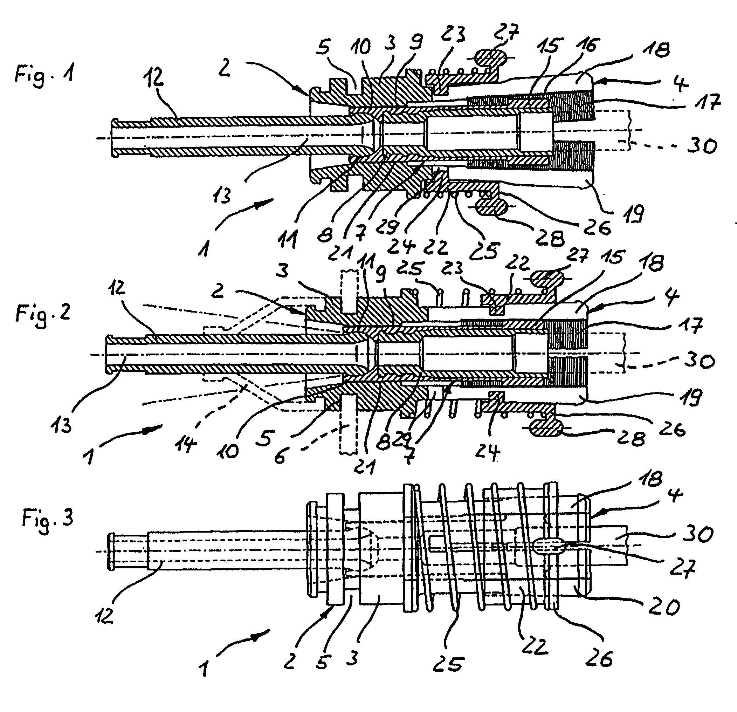

Das in den Figuren dargestellte Anschlußteil 1 weist ein Anschlußgehäuse 2 auf, das als Kunststofformteil ausgebildet ist und ausgangsseitig aus einem Anschlußabschnitt 3 und eingangssseitig aus einem Tüllenabschnitt 4 besteht. Der Anschlußabschnitt 3 weist eine Ringnut 5 auf, über die das Anschlußteil formschlüssig an einer Halteplatte 6 (Figur 2) axial und radial festlegbar ist.

Innerhalb des Anschlußgehäuses 2 ist eine Muffe 7 verschieblich geführt. Die Muffe 7 hat einen Metalleinsatz 8, der innenseitig so gestuft ist, daß das Ende eines Betätigungsmantels 30 aufgenommen werden kann. Der Metalleinsatz 8 ist von einem Kunststoffmantel 9 umspritzt, der ausgangssseitig in einer Kugelpfanne 10 eines Kugelgelenks 11 ausläuft. Durch das Kugelgelenk 11 wird eine Führungshülse 12 gehalten. Muffe 7 und Führungshülse 12 schließen einen Durchgangskanal 13 ein. Die in dem Betätigungsmantel 30 geführte Betätigungsseele geht durch diesen Durchgangskanal 13 bis zu einem zu betätigenden Organ oder einem Betätigungsorgan. Die Führungshülse 12 ist zusätzlich durch eine Gummitülle 14 (Figur 2) umgeben, die das Innere des Anschlußteils 1 gegen Verschmutzung schützt.

Der Kunststoffmantel 9 weist eingangsseitig einen Eingriffsabschnitt 15 auf, welcher an seinem Außenumfang mit einer Vielzahl von axial beabstandeten Eingriffsrippen versehen ist. Der Tüllenabschnitt 4 weist innenseitig gleichfalls eine Vielzahl von Eingriffsrippen 17 auf, die zu den Eingriffsrippen 16 des Kunststoffmantels 9 passen. Dabei ist die Länge des Abschnittes in dem Tüllenabschnitt 4, der solche Eingriffsrippen 17 trägt, wesentlich größer als die des Eingriffsabschnittes 15.

Der Tüllenabschnitt 4 ist über den Umfang gleichmäßig verteilt vierfach geschlitzt, wodurch vier Tüllensegmente 18, 19, 20 gebildet werden. Die Tüllensegmente 18, 19, 20 sind an dem Anschlußabschnitt 3 angeformt und verlaufen zur Eingangsseite des Anschlußteils 1 frei aus. Sie sind so geformt, daß sie in spannungslosem Zustand leicht V-förmig auseinander gespreizt sind, wie aus Figur 1 zu ersehen ist. In diesem Zustand ist die Einheit aus Muffe 7 und Führungshülse 12 frei axial verschieblich in dem Anschlußgehäuse 2 über eine dort vorgesehene Schiebeführung 21 geführt. Die Schiebeführung 21 umgibt unter anderem auch das Kugelgelenk 11 und sorgt dafür, daß die Kugelpfanne 10 sich nicht aufweiten kann, also die Führungshülse 12 fest an der Muffe 7 gehaltert ist.

Der Tüllenabschnitt 4 ist von einer Blockierhülse 22 umgeben. Sie weist innenseitig Vorsprünge 23, 24 auf, die in die Schlitze zwischen den Tüllensegmenten 18, 19, 20 einfassen. Außenseitig ist die Blockierhülse 22 von einer auf Druck beanspruchten Schraubenfeder 25 umgeben, welche sich einerends an dem Anschlußabschnitt 3 und anderenends an einem Ringvorsprung 26 abstützt, welche an dem eingangsseitigen Ende der Blockierhülse 22 angeformt ist. Der Ringvorsprung 26 trägt zwei Betätigungsnasen 27, 28, über die die Blockierhülse 22 handhabbar ist, um sie axial zu verschieben.

Die Tüllensegmente 18, 19, 20 weisen benachbart zum Anschlußgehäuse 2 Ausnehmungen 29 auf, die zu den Vorsprüngen 23, 24 passen und es erlauben, die Blockierhülse 22 - von der Eingangsseite her gesehen - gegen den Uhrzeigersinn zu verdrehen, so daß die Vorsprünge 23, 24 in diese Ausnehmungen 29 einfassen, wenn sich die Blockierhülse 22 in der in Figur 1 dargestellten Nichtblockierstellung befindet. Die Schraubenfeder 25 ist dabei stark vorgespannt.

Die Installation des Anschlußteils 1 geschieht in der Weise, daß es zunächst in der Halteplatte 6 festgelegt wird. Beim Einstellvorgang wird die Führungshülse 12 in Richtung zur Eingangsseite gedrückt, wodurch der Betätigungsmantel 30 gestaucht wird. Ist die für den Einstellvorgang richtige Position der Muffe 7 gefunden, wird die Blockierhülse 22 - von der Eingangsseite her gesehen - im Uhrzeigersinn verdreht, so daß die Vorsprünge 23, 24 aus den Ausnehmungen 29 herausfahren. Durch Einwirkung der Schraubenfeder 25 wird die Blokkierhülse 22 zur Eingangsseite hin verschoben und drückt dabei die Tüllensegmente 18, 19, 20 radial nach innen. Durch diese Bewegung kommen die Eingriffsrippen 17 der Tüllensegmente 18, 19, 20 mit den Eingriffsrippen 16 auf dem Eingriffsabschnitt 15 der Muffe 7 in Eingriff und blockieren hierdurch die Stellung der Muffe 7 in Bezug auf das Anschlußgehäuse 2. Die Schraubenfeder 25 sichert diese Stellung.

Durch Zurückbewegen der Blockierhülse 22 gegen die Wirkung der Schraubenfeder 25 läßt sich der Eingriff wieder lösen, beispielsweise um einen erneuten Einstellvorgang durchzuführen.
¹ Translator's note: reference numeral 3 refers to the connecting portion of connector housing (2) which also has a socket portion (4).

## Patentansprüche

1. Anschlußteil (1) für die Festlegung eines Betätigungszuges, der aus einem Betätigungsmantel (30) und einer darin verschieblich geführten Betätigungsseele besteht, mit folgenden Merkmalen,
a) das Anschlußteil (1) weist ein Anschlußgehäuse (2) für die Festlegung des Anschlußteils (1) auf;
b) das Anschlußgehäuse (2) umgibt einen Durchgangskanal (13) für die Betätigungsseele;
c) in dem Anschlußgehäuse (2) ist eine Muffe (7) für die eingangsseitige Aufnahme des Betätigungsmantels (30) vorgesehen;
d) die Muffe (7) ist in dem Anschlußgehäuse (2) axial verschieblich geführt;
e) die Muffe (7) und das Anschlußgehäuse (2) weisen eine Mehrzahl von zueinander komplementären Eingriffselementen (16, 17) auf, die einen Eingriff in verschiedenen Axialstellungen der Muffe (7) ermöglichen;
f) die gehäuseseitigen Eingriffselemente (17) sind zwischen einer Eingriffsstellung und einer Nichteingriffsstellung beweglich;
g) die muffenseitigen Eingriffselemente (16) sind auf der Außenseite der Muffe (7) und die gehäuseseitigen Eingriffselemente (17) an der Innenseite des Anschlußgehäuses (2) angeordnet;
h) das Anschlußgehäuse (3) weist betätigungsmantelseitig eine Eingriffstülle (4) auf, die die Muffe (7) umgibt und axial unter Bildung von mehreren Tüllensegmenten (18, 19, 20) geschlitzt ist;
i) an den Tüllensegmenten (18, 19, 20) sitzen die gehäuseseitigen Eingriffselemente (17);
j) die Tüllensegmente (18, 19, 20) sind radial beweglich;
k) an dem Anschlußgehäuse (2) ist eine Blockiereinrichtung mit einer Blockierhülse (22) vorgesehen, welche zwischen einer Blockier- und einer Nichtblockierstellung axial verschieblich ist, wobei sie das bzw. die gehäuseseitige(n) Eingriffselement(e) (17) in der Blockierstellung in Eingriffsstellung hält;
**gekennzeichnet durch** folgende Merkmale:
l) die Blockierhülse (22) ist in Richtung auf das freie Ende der Tüllensegmente (18, 19, 20) von der Nichtblockierstellung in die Blockierstellung verschieblich;
m) die Blockierhülse (22) ist in Richtung auf die Blockierstellung federbeaufschlagt.

2. Anschlußteil nach Anspruch 1, **dadurch gekennzeichnet, daß** eine das Anschlußgehäuse (2) umgebende Schraubenfeder für die Federbeaufschlagung vorgesehen ist.

3. Anschlußteil nach Anspruch 1 oder 2, **dadurch gekennzeichnet, daß** das bzw. die Tüllensegment(e) (17, 18, 19) in der Nichteingriffsstellung radial nach außen absteht bzw. abstehen und beim Überschieben der Blockierhülse (22) radial nach innen in die Eingriffsstellung bewegt wird bzw. werden.

4. Anschlußteil nach einem der Ansprüche 1 bis 3, **dadurch gekennzeichnet, daß** die Muffe (7) ausgangsseitig ein angelenktes Führungsrohr (12) aufweist.

5. Anschlußteil nach Anspruch 4, **dadurch gekennzeichnet, daß** das Führungsrohr (12) über ein Kugelgelenk (11) an der Muffe (7) angelenkt ist.

## Claims

1. Connecting piece (1) for mounting a control cable consisting of an actuating jacket (30) and an actuating core displaceably guided within said actuating jacket (30), with the following features:
a) the connecting piece (1) has a connector housing (2) for fixing the connecting piece (1);
b) the connector housing (2) surrounds a channel (13) for the actuating core;
c) a sleeve (7) is provided in connector housing (2) for receiving the actuating jacket (30) on the entry side;
d) sleeve (7) is located axially displaceably in connector housing (2);
e) sleeve (7) and connector housing (2) have a plurality of reciprocally complementary engagement elements (16, 17) which make possible an engagement in different axial positions of sleeve (7);
f) the engagement elements (17) on the connector housing side are movable between an engaged position and a non-engaged position;
g) the engagement elements (16) on the sleeve side are arranged on the outside of sleeve (7) and the engagement elements (17) on the connector housing side are arranged on the inside of connector housing (2);
h) connector housing (3)¹ has an engagement socket (4) on the actuating jacket side, which socket surrounds sleeve (7) and is axially slotted to form a plurality of socket segments (18, 19, 20);
i) the engagement elements (17) on the connector housing side are located in the socket segments (18, 19, 20);
j) the socket segments (18, 19, 20) are movable radially;
k) a locking arrangement with a locking collar (22) is provided on connector housing (2), which collar is axially displaceable between a locking and a non-locking position, said collar holding the engagement element(s) (17) on the connector housing side in the engaged position when in the locking position;
**characterised by** the following features:
l) the locking collar (22) is displaceable towards the free end of the socket segments (18, 19, 20) from the non-locking position to the locking position;
m) locking collar (22) is spring-loaded towards the locking position.

2. Connecting piece according to Claim 1, **characterised in that** a helical spring surrounding the connector housing (2) is provided for the spring-loading effect.

3. Connecting piece according to Claim 1 or 2, **characterised in that** the socket segments(s) (17, 18, 19) project(s) radially outwardly in the non-engaged position and is or are moved radially inwardly into the engaged position when locking collar (22) is pushed over it or them.

4. Connecting piece according to one of Claims 1 to 3, **characterised in that** sleeve (7) has a jointed guide tube (12) on the exit side.

5. Connecting piece according to Claim 4, **characterised in that** guide tube (12) is jointed to sleeve (7) by means of a ball-and-socket joint (11).

## Revendications

1. Élément de liaison (1) pour fixer un câble d'actionnement composé d'une gaine de câble (30) et d'une âme de câble guidée de façon mobile dans cette dernière, comportant les caractéristiques suivantes :
a) l'élément de liaison (1) présente un boîtier de liaison (2) pour fixer l'élément de liaison (1) ;
b) le boîtier de liaison (2) entoure un canal de passage (13) pour l'âme du câble ;
c) dans le boîtier de liaison (2) est prévu un manchon (7) destiné à recevoir la gaine du câble (30) à l'entrée ;
d) le manchon (7) est guidé dans le boîtier de liaison (2) de façon à être mobile axialement ;
e) le manchon (7) et le boîtier de liaison (2) présentent plusieurs éléments d'enclenchement complémentaires entre eux (16, 17) qui se mettent en prise dans différentes positions axiales du manchon (7) ;
f) les éléments d'enclenchement (17) côté boîtier sont mobiles entre une position d'enclenchement et une position de non-enclenchement ;
g) les éléments d'enclenchement (16) côté manchon sont disposés sur le côté extérieur du manchon (7) et les éléments d'enclenchement (17) côté boîtier, sur le côté intérieur du boîtier de liaison (2) ;
h) le boîtier de liaison (2) présente du côté de la gaine un passe-câble d'enclenchement (4) qui entoure le manchon (7) et qui est fendu axialement en formant plusieurs segments de passe-câble (18, 19, 20) ;
i) les éléments d'enclenchement (17) côté boîtier sont situés sur les segments de passe-câble (18, 19,20);
j) les segments de passe-câble (18, 19, 20) sont mobiles radialement ;
k) un dispositif de blocage avec une douille de blocage (22) est prévu sur le boîtier de liaison (2), qui peut aller et venir axialement entre une position de blocage et une position de non-blocage, sachant qu'en position de blocage, il maintient l'élément ou les éléments d'enclenchement (17) côté boîtier en position d'enclenchement ;
**caractérisé par** les caractéristiques suivantes :
1) la douille de blocage (22) peut être déplacée en direction de l'extrémité libre des segments de passe-câble (18, 19, 20) de la positon de non-blocage à la position de blocage ;
m) la douille de blocage (22) est sollicitée par un ressort en direction de la position de blocage.

2. Élément de liaison selon la revendication 1, **caractérisé en ce qu'**un ressort hélicoïdal entourant le boîtier de liaison (2) est prévu pour actionner le dispositif avec ressort.

3. Élément de liaison selon la revendication 1 ou 2, **caractérisé en ce que** le ou les segment(s) de passe-câble (18, 19, 20), lorsqu'il ne sont pas enclenchés, fait ou font saillie radialement vers l'extérieur, et lorsque la douille de blocage (22) les recouvre en coulissant, ils sont déplacés radialement vers l'intérieur en position d'enclenchement.

4. Élément de liaison selon l'une des revendications 1 à 3, **caractérisé en ce que** le manchon (7) présente du côté de la sortie un tube de guidage (12) qui y est relié de manière articulée.

5. Élément de liaison selon la revendication 4, **caractérisé en ce que** le tube de guidage (12) est relié de manière articulée au manchon (7) par l'intermédiaire d'une articulation sphérique (11).
